# EUROPÄISCHE PATENTSCHRIFT

(11) **EP 1 106 468 B1**
(45) Veröffentlichungstag und Bekanntmachung des Hinweises auf die Patenterteilung: **23.02.2005**
(21) Anmeldenummer: 00125820.1
(22) Anmeldetag: 24.11.2000
(51) Int. Cl.: B61L 1/20, B60L 15/32

(54) **Verfahren und Schaltungsanordnung zum Vermeiden ungewollten Ansprechens von Gleisstromkreisen**
Method and circuit arrangement for avoiding undesired response of track circuits
Procédé et circuit pour supprimer la réponse non désirée de circuits de voie

(30) Priorität: 07.12.1999 DE 19958965
(43) Veröffentlichungstag der Anmeldung: 13.06.2001
(73) Patentinhaber: SIEMENS AKTIENGESELLSCHAFT, 80333 München (DE)
(72) Erfinder: Baumgart, Michael, Dipl.-Ing., 91058 Erlangen (DE); Ditschun, Hajo, Dipl.-Ing., 91054 Erlangen (DE); Hagemann, Oliver, Dipl.-Ing. (TU), 91052 Erlangen (DE); Schülein, Peter, Dipl.-Ing., 91058 Erlangen (DE); Winzer, Gerald, Dipl.-Ing., 91056 Erlangen (DE)

(56) Entgegenhaltungen:
- US-A- 3 745 933
- PATENT ABSTRACTS OF JAPAN vol. 1999, no. 14, 22. Dezember 1999 (1999-12-22) & JP 11 243640 A (NEC CORP), 7. September 1999 (1999-09-07)

## Beschreibung

Die Gleisstrecken von Bahnsystemen sind in Gleisabschnitte geteilt, um ein gleichzeitiges Fahren von mehreren Zügen auf einer Strecke zu ermöglichen. In jeden Gleisabschnitt darf ein Zug nur dann einfahren, wenn der Gleisabschnitt "frei" gemeldet ist, d. h. wenn sicher ist, daß sich kein anderer Zug in diesem Gleisabschnitt bewegt. Die Frei- oder Besetztmeldung erfolgt bei modernen Bahnsystemen mit einem automatischen Zugerfassungssystem. In der Regel geschieht die Erfassung über die Gleise mit Hilfe von Gleisstromkreisen. Dabei liegen die beiden Gleise des Gleisabschnitts an den Polen einer Gleich- oder niederfrequenten Spannung. Wird der Gleisabschnitt von einem Zug befahren, so stellen die Räder über die Radachsen einen Kurzschluß her, der meßtechnisch erfaßt und signaltechnisch ausgewertet werden kann.

Die Gleisstromkreise sind indessen empfindlich gegenüber Fremdeinwirkungen durch Störströme. Solche Störströme können insbesondere durch elektrische Triebfahrzeuge hervorgerufen werden. Durch die Betreiber von Bahnnetzen werden deshalb hohe Sicherheitsanforderungen gegen das Generieren von Störströmen durch Triebfahrzeuge erhoben.

Eine Störstromquelle stellt der Einschaltstromstoß der Triebfahrzeugtransformatoren dar. Beim Einschalten eines Transformators fließt durch den sogenannten "inrush", d. h. durch den Aufbau des magnetischen Feldes im Transformatorkern, in den ersten Halbwellen ein unsymmetrischer Strom. Unsymmetrie des Stromes bedeutet aber einen Gleichstromanteil. Dieser Gleichstrom kann bei ungünstiger Phasenlage der Betriebsspannung im Augenblick des Einschaltens des Fahrzeugtranstormators dem Meßstrom des Gleisstromkreises entgegengerichter sein.

Der Gleisstromkreis muß deshalb so eingestellt werden, daß er diesen durch ein Triebfahrzeug hervorgerufenen Störstrom toleriert. Ein Problem stellt dabei die Kopplung mehrerer Triebfahrzeuge dar, bei der durch die parallel eingeschalteten Transformatoren ein Einschaltstromstoß in erheblicher Höhe hervorgerufen werden kann. Der entstehende Gleichstrom kann allein durch entsprechende Bemessung des Gleisstromkreises dann nicht mehr beherrscht werden und verursacht gegebenenfalls ein ungewolltes Ansprechen des Gleisstromkreises, so daß der betreffende Gleisabschnitt fälschlich frei gemeldet wird.

Das Dokument JP 11-243640 beschreibt ein System, das zu hohe Einschaltströme bei Zügen mit mehreren Triebfahrzeugen vermeidet, indem es den Strom mißt und das weitere Einschalten verhindert, wenn die Einschaltströme der bereits eingeschalteten Antriebsanlagen zu hoch sind.

Der Erfindung liegt die Aufgabe zugrunde, ein Verfahren und eine Schaltungsanordnung anzugeben, mit denen ein ungewolltes Ansprechen von Gleisstromkreisen beim Inbetriebnehmen gekoppelter Triebfahrzeuge sicher vermieden wird.

Erfindungsgemäß wird die Aufgabe durch die Merkmale der Ansprüche 1 und 4 gelöst. Zweckmäßige Ausgestaltungen sind Gegenstand der Unteransprüche.

Danach werden die Hauptschalter der Triebfahrzeuge hard- oder softwaremäßig so miteinander verkettet, daß sie, beginnend vom besetzten Führerstand an einem Ende des Triebfahrzeugverbandes, zeitversetzt in der Reihenfolge der Triebfahrzeuge eingeschaltet werden.

Zweckmäßig werden dazu die Steuereinrichtungen für die Hauptschalter jedes Triebfahrzeuges so miteinander verschleift, daß der Schleifenausgang eines Triebfahrzeuges nach Einschalten des Hauptschalters des Triebfahrzeuges zeitverzögert mit der Steuer-Betriebsspannung beaufschlagt wird, die dann am Schleifeneingang des nachfolgenden Triebfahrzeuges die Freigabe der Einschaltung von dessen Hauptschalter bewirkt.

Die Erfindung soll nachstehend anhand eines Ausfuhrungsbeispiels näher erläutert werden. In den Zeichnungen zeigen
Fig. 1 einen Triebfahrzeugverband von drei Triebfahrzeugen mit jeweils zwei Führerständen und
Fig. 2 eine Schaltungsanordnung nach der Erfindung.

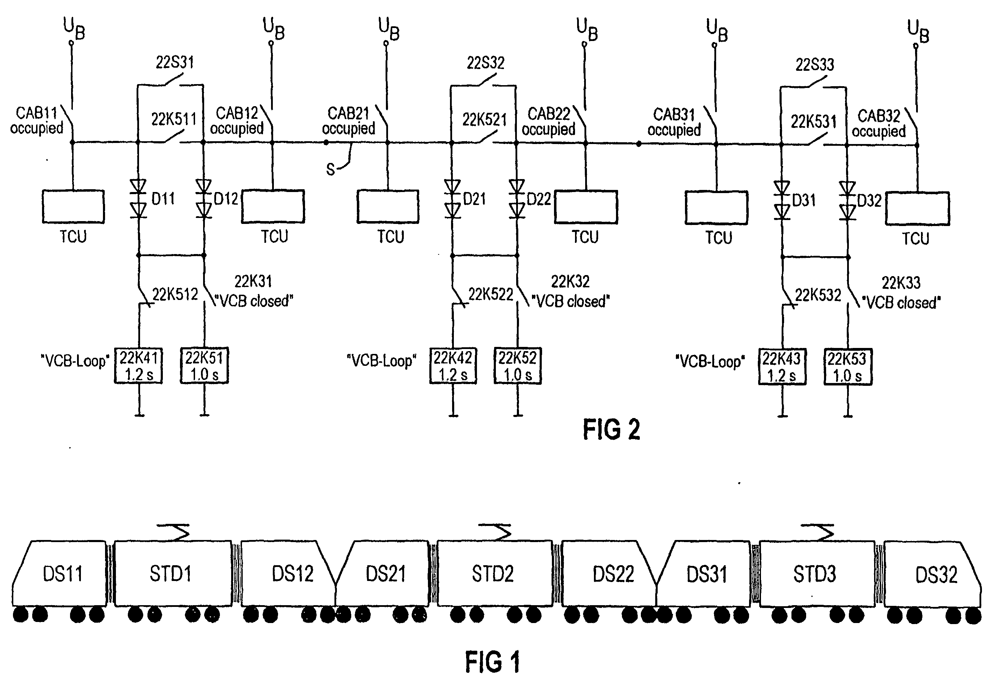

Zum besseren Verständnis der Schaltungsanordnung, wie sie nach Fig. 2 gezeigt ist, ist in Fig 1 ein Fahrzeugverband, bestehend aus drei Triebfahrzeugen, dargestellt. Die Triebfahrzeuge haben jeweils einen vorderen und einen hinteren Führerstand DS11...DS32 und ein Antriebsmittelteil STD1..STD3, das u. a. den Fahrzeugtransformator beherbergt.

Die drei Triebfahrzeuge sind an den durch Punkte gekennzeichneten Stellen mit ihren Betriebsspannungsschleifen S elektrisch miteinander verbunden.

Der Einschaltvorgang beginnt an einem besetzten Führerstand DS11 oder DS32 an einem der beiden Enden des Triebfahrzeugverbandes. Im vorliegenden Fall soll zunächst davon ausgegangen werden, daß der Führerstand DS11 besetzt wird.

Der Fahrzeugführer schaltet den Steuer-Betriebsstromkreis am Schalter CAB11 ein. Die Steuer-Betriebsspannung U_{B} gelangt dabei nur an eine Teilschleife der Betriebsspannungsschleife S, da die Schaltkontakte 22K511...22K531 geöffnet sind. Die Schaltkontakte 22K512...22K532 in den Abzweigen sind jedoch geschlossen., so daß ein Zeitrelais 22K41 aktiviert wird, das nach einer Verzögerungszeit T₁, im vorliegenden Fall 1,2 s, den Hauptschalter VCB1 (hier nicht gezeigt) einschaltet, mit dem der Transformator des ersten Triebfahrzeuges einschließlich Antriebssteuergerät TCU in Betrieb genommen wird. Ein Hilfskontakt 22K31 des Hauptschalters VCB1, der über Dioden D11 an der Steuer-Betriebsspannung U_{B} liegt, schaltet darauf das Zeitrelais 22K51 ein, mit dem nach Ablauf der voreingestellten Verzogerungszeit T₂, hier 1 s, der Schaltkontakt 22K511 geschlossen und der Schaltkontakt 22K512 geöffnet wird.

Der Schaltkontakt 22K512 trennt die Versorgung für das Zeitrelais 22K41 auf und verhindert so, daß der schon freigegebene Hauptschalter VCB1, sollte dieser nochmals geöffnet werden, sofort wieder schließen kann. Durch das Schließen des Schaltkontakts 22K511 gelangt die Steuer-Betriebsspannung U_{B} auf die zweite Teilschleife der Betriebsspannungsschleife S und damit gleichzeitig an die erste Teilschleife des nächsten Triebfahrzeuges. Der Vorgang wiederholt sich so lange, bis alle Triebfahrzeuge eingeschaltet sind.

Wird der Triebfahrzeugverband dagegen vom Führerstand DS32 aus gesteuert, so gelangt die Steuer-Betriebsspannung UB nach Einschalten des Schalters CAB32 über Dioden D32 an das Zeitrelais 22K43 dieses Triebfahrzeuges, jedoch wegen der Entkopplung durch Dioden D31 noch nicht an die andere Teilschleife der Betriebsspannungsschleife S. Der Vorgang läuft darauf analog der oben beschriebenen Weise, nur in anderer Richtung, ab.

Die Schalter 22S31...22S33 sind aus Sicherheitsgründen vorgesehen, um in einem Fehlerfall auf einem Triebfahrzeug die Schaltkontakte 22K511...22K531 überbrücken zu können.

Die Schaltung benötigt nur eine Steuerleitung durch den Zug und arbeitet richtungsunabhängig, d. h. unabhängig davon, in welche Richtung der Zug fahren soll.

## Patentansprüche

1. Verfahren zum Vermeiden ungewollten Ansprechens von Gleisstromkreisen beim Einschalten der Antriebe von gekoppelten elektrischen Triebfahrzeugen, **dadurch gekennzeichnet, daß** die Hauptschalter der Triebfahrzeuge hard- oder softwaremäßig so miteinander verkettet werden, daß sie, beginnend vom besetzten Führerstand an einem Ende des Triebfahrzeugverbandes, zeitversetzt in der Reihenfolge der Triebfahrzeuge eingeschaltet werden.

2. Verfahren nach Anspruch 1, **dadurch gekennzeichnet, daß** die Steuereinrichtungen für die Hauptschalter jedes Triebfahrzeuges so miteinander verschleift sind, daß der Schleifenausgang eines Triebfahrzeuges nach Einschalten des Hauptschalters des Triebfahrzeuges zeitverzögert mit der Steuer-Betriebsspannung beaufschlagt wird, die am Schleifeneingang des nachfolgenden Triebfahrzeuges die Freigabe für das Einschalten von dessen Hauptschalter bewirkt.

3. Verfahren nach Anspruch 1 oder 2, **dadurch gekennzeichnet, daß** das Wiedereinschalten eines Hauptschalters nach erfolgtem Ein- und Ausschalten verzögert wird.

4. Schaltungsanordnung zum Vermeiden ungewollten Ansprechens von Gleisstromkreisen beim Einschalten der Antriebe von gekoppelten elektrischen Triebfahrzeugen durch jeweils einen mit einer Steuer-Betriebsspannung (U_{B}) angesteuerten Hauptschalter (VCB1, VCB2, VCB3) zur Durchführung des Verfahrens nach den Ansprüchen 1 bis 3, **gekennzeichnet durch** einen ein Zeitrelais (22K51, 22K52, 22K53) ansteuernden Hilfskontakt (22K31, 22K32, 22K33) des Hauptschalters (VCB1, VCB2, VCB3) und ein **durch** das Zeitrelais (22K51, 22K52, 22K53) nach einer Verzögerungszeit (T₂) betätigten, die Steuer-Betriebsspannung (U_{B}) mindestens an einen mit dem nachfolgenden Triebfahrzeug verbundenen Ausgang einer Betriebsspannungsschleife (S) schaltenden Schalter (22K511, 22K521, 22K531).

5. Schaltungsanordnung nach Anspruch 4, **dadurch gekennzeichnet, daß** die Betriebspannungsschleife (S) eines Triebfahrzeuges durch einen durch das Zeitrelais (22K51, 22K52, 22K53) nach der Verzögerungszeit (T₂) betätigten Schaltkontakt (22K511, 22K521, 22K531) in zwei Teilschleifen zur Seite jeweils des vorderen (DS11, DS21, DS31) und des hinteren Führerstandes (DS12, DS22, DS33) hin aufgeteilt ist und die Betriebsspannungs-zuführungen für die Betätigungseinrichtungen des Hauptschalters (VCB1, VCB2, VCB3), des Zeitrelais (22K51, 22K52, 22K53) und den durch das Zeitrelais (22K51, 22K52, 22K53) betätigten Schalter mit beiden Teilschleifen über Entkopplungsdioden (D11, D12, D21, D22, D31, D32) verbunden sind.

## Claims

1. Method for avoiding an undesired response by track circuits when the drives of coupled electric power units are switched on, **characterized in that** the main switches of the power units are interlinked with one another in terms of hardware or software in such a way that they are switched on with time delays in the sequence of the power units starting from the occupied driver's cab at one end of the power unit train.

2. Method according to Claim 1, **characterized in that** the control devices for the main switches of each power unit are connected to one another in such a way that the control operating voltage is applied to the loop output of a power unit after the main switch of the power unit has been switched on, said voltage enabling the switching on of the main switch of the subsequent power unit at the loop input of said subsequent unit.

3. Method according to Claim 1 or 2, **characterized in that** the re-activation of a main switch after it has been switched on and off is delayed.

4. Circuit arrangement for avoiding an undesired response by track circuits when the drives of coupled electric power units are switched on by means of, in each case, one main switch (VCB1, VCB2, VCB3), actuated by means of a control operating voltage (U_{B}), in order to carry out the method according to Claims 1 to 3, **characterized by** an auxiliary contact (22K31, 22K32, 22K33), which actuates a timing relay (22K51, 22K52, 22K53), of the main switch (VCB1, VCB2, VCB3), and a switch (22K511, 22K521, 22K531), which is activated by the timing relay (22K51, 22K52, 22K53) after a delay (T₂) and connects the control operating voltage (U_{B}) at least to an output, connected to the subsequent power unit, of an operating voltage loop (S).

5. Circuit arrangement according to Claim 4, **characterized in that** the operating voltage loop (S) of a power unit is divided by a switching contact (22K511, 22K521, 22K531), activated by the timing relay (22K51, 22K52, 22K53) after the delay (T₂), into two component loops on the side of the front driver's cab (DS11, DS21, DS31) and of the rear driver's cab (DS12, DS22, DS33), respectively, and the operating voltage feed lines for the activation devices of the main switch (VCB1, VCB2, VCB3), of the timing relay (22K51, 22K52, 22K53) and the switches activated by the timing relay (22K51, 22K52, 22K53) are connected to two component loops via decoupling diodes (D11, D12, D21, D22, D31, D32).

## Revendications

1. Procédé pour supprimer la réponse non souhaitée de circuits de voie e n cas d'enclenchement d'entraînements d e véhicules a utomoteurs électriques couplés, **caractérisé en ce que** les commutateurs principaux des véhicules automoteurs sont reliés entre eux par voie matérielle ou logicielle de manière à être connectés à partir d e la c abine d e conduite o ccupée à u ne extrémité de l'ensemble de véhicules automoteurs, de manière décalée dans le temps suivant l'ordre des véhicules automoteurs.

2. Procédé selon la revendication 1, **caractérisé en ce que** les dispositifs de commande des commutateurs principaux de chaque véhicule automoteur sont mis en boucles les uns par rapport aux autres de manière à ce que la sortie de la boucle d'un véhicule automoteur soit alimentée de manière décalée dans le temps par la tension de commande après enclenchement du commutateur principal du véhicule automoteur, ladite tension de commande entraînant l'enclenchement du commutateur principal du véhicule automoteur suivant lors de son entrée dans la boucle.

3. Procédé selon la revendication 1 ou 2, **caractérisé en ce que** le réenclenchement d'un commutateur principal est retardé après un enclenchement et un désenclenchement réussi.

4. Circuit pour supprimer la réponse non désirée de circuits de voie en cas d'enclenchement d'entraînements de véhicules automoteurs électriques couplés, au moyen respectivement de commutateurs principaux (VCB1, VCB2, VCB3) commandés par une tension de commande (U_{B}), pour mettre en oeuvre le procédé selon les revendications 1 à 3, **caractérisé par** un contact auxiliaire (22K31, 22K32, 22K33) du commutateur principal (VCB1, VCB2, VCB3) commandant un relais à action temporisée (22K51, 22K52, 22K53) et par un commutateur (22K511, 22K521, 22K531) actionné par un relais à action temporisée (22K51, 22K52, 22K53) après un temps de retard (T₂), ledit commutateur commutant la tension de commande (U_{B}) au moins au niveau d'une sortie de boucle de tension d'alimentation (S) reliée au véhicule automoteur suivant.

5. Circuit selon la revendication 4, **caractérisé en ce que** la boucle de tension d'alimentation (S) d'un véhicule automoteur est divisée en deux parties de boucle du côté respectivement de la cabine de conduite avant (DS11, DS21, DS31) et de la cabine de conduite arrière (DS12, DS22, DS33) au moyen d'un contact de commutation (22K511, 22K521, 22K531) actionné par le relais à action temporisée (22K51, 22K52, 22K53) après le temps de retard (T₂) et **en ce que** les circuits de tension d'alimentation des dispositifs d'actionnement du commutateur principal (VCB1, VCB2, VCB3), du relais à action temporisée (22K51, 22K52, 22K53) et du commutateur actionné par le relais à action temporisée (22K51, 22K52, 22K53) sont reliés aux deux parties de boucle par l'intermédiaire des diodes de découplage (D11, D12, D21, D22, D31, D32).
